(19) Europäisches Patentamt
European Patent Office
Office européen des brevets

(11) EP 4 121 482 B1

(12) **EUROPEAN PATENT SPECIFICATION**

(45) Date of publication and mention of the grant of the patent:
**31.07.2024 Bulletin 2024/31**

(21) Application number: **21712529.3**

(22) Date of filing: **19.03.2021**

(51) International Patent Classification (IPC):
***C08L 69/00*** *(2006.01)*

(52) Cooperative Patent Classification (CPC):
(C-Sets available)
**C08L 69/00;** C08L 2205/025; C08L 2205/035

(Cont.)

(86) International application number:
**PCT/EP2021/057077**

(87) International publication number:
**WO 2021/186026 (23.09.2021 Gazette 2021/38)**

(54) **COMPOSITION COMPRISING POLYCARBONATE AND POLY BUTYLENE TEREPHTHALATE**

ZUSAMMENSETZUNG MIT POLYCARBONAT UND POLYBUTYLENTEREPHTHALAT

COMPOSITION COMPRENANT DU POLYCARBONATE ET DU POLY TÉRÉPHTALATE DE BUTYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.03.2020 EP 20164627**
**20.03.2020 EP 20164623**
**20.03.2020 EP 20164651**

(43) Date of publication of application:
**25.01.2023 Bulletin 2023/04**

(73) Proprietor: **SABIC Global Technologies B.V.**
**4612 PX Bergen op Zoom (NL)**

(72) Inventor: **JHA, Roshan Kumar**
**6160 GA Geleen (NL)**

(74) Representative: **Algemeen Octrooi- en Merkenbureau B.V.**
**P.O. Box 645**
**5600 AP Eindhoven (NL)**

(56) References cited:
**WO-A1-2008/136839**
**WO-A1-2014/097196**
**WO-A1-2017/145075**
**US-A1- 2008 269 399**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 121 482 B1

(52) Cooperative Patent Classification (CPC): (Cont.)

C-Sets
**C08L 69/00, C08L 25/12, C08L 51/04, C08L 67/02;**
**C08L 69/00, C08L 25/14, C08L 51/04, C08L 67/02;**
**C08L 69/00, C08L 51/04, C08L 67/02, C08L 67/02**

## Description

The present invention relates to a composition comprising aromatic polycarbonate, poly(butylene terephthalate) and an impact modifier.

Such compositions are known per se and commercially available for example From SABIC under the tradename XENOY®. Such compositions are commonly referred to as PC/PBT blends or PC/PBT compositions with PC referring to polycarbonate and PBT to polybutylene terephthalate. Applications for PC/PBT compositions include parts for automotive and electronic appliances.

Aromatic polycarbonates are generally manufactured using two different technologies. In the first technology, known as the interfacial technology or interfacial process, phosgene is reacted with bisphenol A (BPA) in a liquid phase. In this process the aromatic polycarbonate chains will grow, i.e. the molecular weight increases, until the reaction is stopped by means of addition of a chain-terminating agent, also referred to as end-capping agent. Typically, such end-capping agents are mono-hydroxy compounds such for example phenol. Due to the nature of the interfacial technology end-capping levels of the aromatic polycarbonate are very high, which means that the aromatic polycarbonate obtained via the interfacial technology will have a relatively low amount of terminal hydroxyl groups at the end of the aromatic polycarbonate chains. Consequently, such aromatic polycarbonates generally have very good long-term heat stability. Although this process produces the desired polymer, there are disadvantages associated with it. For example, phosgene is extremely toxic and hence results in safety concerns. In addition, methylene chloride, which is often used as a solvent in the interfacial process, raises environmental concerns.

Another well-known technology for the manufacture of aromatic polycarbonate is the so-called melt technology, sometimes also referred to as melt transesterification, melt process, or melt polycondensation technology. In the melt technology, or melt process, a bisphenol, typically bisphenol A (BPA), is reacted with a carbonate, typically diphenyl carbonate (DPC), in the melt phase. The reaction between DPC and BPA releases phenol, which needs to be removed from the reaction mixture in order to progress the polymerization reaction. Typically, the melt process is carried out in a number of stages with increasing temperatures and decreasing pressures until a desired molecular weight is obtained. Due to the nature of the melt process, the resulting aromatic polycarbonate typically has a significantly higher amount of terminal hydroxyl groups. Due to this, the obtained aromatic polycarbonate, in comparison with the interfacially manufactured aromatic polycarbonate, has a lower long term heat stability performance. Polycarbonate manufactured with the interfacial process is referred to herein as interfacial polycarbonate whereas polycarbonate manufactured with the melt process is referred to herein as melt polycarbonate.

WO 2014/097196 discloses a composition made by a process comprising melt blending (a) from 10 to 70 weight percent of a partially crystalline polyester component selected from poly(butylene terephthalate), poly(ethylene terephthalate), poly(butylene terephthalate) copolymers, polyethylene terephthalate) copolymers, and combinations thereof; (b) from 10 to 60 weight percent of an amorphous polycarbonate having a Fries rearrangement of greater than 150 to 10,000 ppm; (c) from 5 to 50 weight percent of a filler; and (d) optionally, from 0.01 to 10 wt.% of an antioxidant, mold release agent, colorant, stabilizer, or a combination thereof; wherein the melt blended composition has a polycarbonate aryl hydroxy end-group content of at least 300 ppm; and wherein the composition, when molded into an article having a 2.0 mm thickness, provides a near infrared transmission at 960 nanometers of greater than 45%.

WO 2017/093232 discloses a thermoplastic composition comprising 0 to 50 weight percent of a polycarbonate, 10 to 50 weight percent of a polyester carbonate copolymer, 5 to 20 weight percent of a poly(ethylene terephthalate), 20 to 50 weight percent of a poly(butylene terephthalate), and optionally 5 to 30 weight percent of an impact modifier, wherein weight percent is based on the combined amounts of polycarbonate, polyester carbonate copolymer, poly(ethylene terephthalate), poly(butylene terephthalate) and optional impact modifier.

US 2008/0269399 discloses a composition comprising a polyester-polycarbonate polymer comprising isophthalate-terephthalate-resorcinol ester units and carbonate units, a first polyester selected from poly( ethylene-terephthalate), poly(ethylene-isophthalate), or a combination thereof, and a second polyester comprising butylene-terephthalate units, cyclohexanedimethylene terephthalate units, or a combination of cyclohexanedimethylene terephthalate units and ethylene terephthalate units. The polyester polycarbonate polymer in this reference is manufactured using an interfacial process.

WO2017/145075A1 discloses articles formed from composition comprising a melt polycarbonate component and an interfacial polycarbonate component.

The present inventors have found that the impact properties of compositions comprising aromatic polycarbonate, poly(butylene terephthalate) and an impact modifier depend not only on the type and/or amount of impact modifier but also on the type of polycarbonate. More in particular the present inventors surprisingly found that the endcap level of the polycarbonate has an effect on the impact performance of such blends. This was found in particular for compositions with a relatively high amount of polycarbonate and a relatively low amount of impact modifier. The present inventors have found that replacing an interfacial polycarbonate by a melt polycarbonate whereby the molecular weight of the polycarbonates as well as the remaining components of the composition were kept similar, may result in a drop in impact

energy.

In view of the foregoing it is an object of the invention to provide a PC/PBT composition wherein at least a part of the polycarbonate originates from the melt process and wherein such composition has good impact properties, preferably impact properties within 10% of the impact properties of otherwise identical compositions based entirely on interfacial polycarbonate. A further object of the present invention is to provide a PC/PBT composition wherein at least a part of the polycarbonate originates from the melt process and wherein such composition has both good impact properties as well as good heat resistance properties. In that respect the term heat resistance means the resistance to deformation upon increasing temperature such as typically measured as a Vicat softening temperature and/or a heat distortion temperature, sometimes also referred to as heat deflection temperature.

The present inventors have surprisingly found that these objects can be met, at least in part, when the endcap level of the aromatic polycarbonate of the composition has an endcap of at least 75 mol%.

Accordingly the present invention relates to a composition comprising at least 60 wt.% aromatic polycarbonate and at most 40 wt.% of polyester comprising poly(butylene terephthalate), based on the combined amounts of aromatic polycarbonate and polyester and from 0 - 10 wt.% of impact modifier, based on the weight of the composition, wherein the aromatic polycarbonate has an endcap level of at least 75 mol% and wherein the aromatic polycarbonate comprises melt polycarbonate.

More specifically the present invention relates to a composition comprising at least 60 wt.% aromatic polycarbonate and at most 40 wt.% of polyester comprising poly(butylene terephthalate), based on the combined amounts of aromatic polycarbonate and polyester, from 1 - 10 wt.% of impact modifier, based on the weight of the composition, wherein the composition comprises the aromatic polycarbonate and the polyester, the aromatic polycarbonate has an endcap level of at least 75 mol%, preferably at least 80 mol% and the aromatic polycarbonate comprises melt polycarbonate.

A polycarbonate obtained by the melt transesterification process is known to be structurally different from polycarbonate obtained by the interfacial process. In that respect it is noted that in particular melt polycarbonate typically has a minimum amount of Fries branching, which is generally absent in interfacial polycarbonate. In view of the difference between these two processes also the terminal hydroxyl group content typically differs. In the interfacial process typically the end-capping levels of the aromatic polycarbonate are very high (≥ 90 mol %) and thereby all of the terminal hydroxyl groups can be end-capped with an endcapping agent so that the terminal hydroxyl group content for interfacial polycarbonate can be as low as 0 ppm. On the other hand the melt polycarbonate process typically results in polycarbonate having a terminal hydroxyl group content of at least about 150 ppm, at least 200 or at least 250 ppm.

Polycarbonate

The aromatic polycarbonate in the composition according to the invention comprises melt polycarbonate and has an endcap level of at least 75 mol%, preferably at least 80 mol%, more preferably at least 85 mol%. The endcap level may be at most 95 mol%, such as at most 90 mol%. For the purpose of the present invention, it is noted that the endcap level is considered as a value measured on the aromatic polycarbonate of the composition.

The aromatic polycarbonate may be a mixture of melt polycarbonate and a polycarbonate not manufactured using the melt process such as the interfacial process, as long as the endcap level is at least 75 mol%. Thus, by way of example an amount of interfacial polycarbonate with an endcap level of about 100 mol% may be mixed with an amount of melt polycarbonate having an endcap level of about 60 mol% as long as the measured endcap level of the mixture is at least 75 mol%.

For the avoidance of doubt the interfacial polycarbonate, if any, may be a mixture of two or more interfacial polycarbonates. Likewise, the melt polycarbonate may be a mixture of two or more melt polycarbonates.

It is preferred that the aromatic polycarbonate contains at least 50 wt.%, more preferably at least 75 wt.%, more preferably at least 95 wt.% of melt polycarbonate, based on the amount of the aromatic polycarbonate. The aromatic polycarbonate may essentially consist or consist of melt polycarbonate provided of course that the aromatic polycarbonate has an endcap level of at least 75 mol%. Thus, if the aromatic polycarbonate consists of melt polycarbonate then the melt polycarbonate has an endcap level of at least 75 mol%. For the purpose of the present invention the term aromatic polycarbonate does not include polyester-polycarbonate (co)polymers.

If the aromatic polycarbonate consists of melt polycarbonate then the melt polycarbonate may be a mixture of two melt polycarbonates, for example a mixture of melt polycarbonates, which mutually differ in molecular weight, Fries branching, and/or endcap level. Preferably, the aromatic polycarbonate consists of a melt polycarbonate with an endcap of at least 75 mol%.

The composition of the invention generally does not comprise polycarbonate other than aromatic polycarbonate. Preferably and for the purpose of the present invention a polyester carbonate, or a polyester polycarbonate copolymer, is/are not considered as an aromatic polycarbonate.

The melt polycarbonate is an aromatic polycarbonate obtained by reacting a bisphenol and a diarylcarbonate,

where the bisphenol is preferably bisphenol A (BPA) and the diarylcarbonate is preferably diphenyl carbonate (DPC). The aromatic polycarbonate is preferably a linear aromatic polycarbonate meaning that the melt transesterification is preferably carried out on the basis of the bisphenol and diaryl carbonate in absence of any branching agent, such as for example multi-functional alcohols. For the purpose of the present invention, the melt polycarbonate may however be branched or linear.

Notwithstanding the foregoing it is well known that the melt transesterification process for the manufacture of polycarbonate, wherein bisphenol a and diphenyl carbonate are reacted in molten conditions thereby releasing phenol, results in a certain amount of branching, known as Fries branching. The amount of Fries branching depends inter alia on the type and amount of transesterification catalyst that is used as well as the reaction conditions that are applied, in particular the temperature, pressure and residence times. Thus, a linear polycarbonate in the context of the present invention will contain a certain amount of Fries branching. It is however to be understood that the polycarbonate in the present invention is preferably manufactured in absence of a branching agent, i.e. an agent that includes three or more functional groups and thereby introduces branching or crosslinking of the polycarbonate.

The amount of Fries branching is preferably at least 1000 ppm, at least 1100 ppm, or at least 1200 ppm. And preferably at most 2000 ppm. The amount of Fries branching may be from 1000 - 2000 ppm, or 1100 - 2000ppm or 1100 - 1700 ppm. The term Fries branching is known to the skilled person and refers inter alia to the structures as disclosed in EP2174970 and reproduced below as structures (1) to (5), yet may include further branched structures.

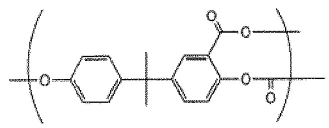
(1)

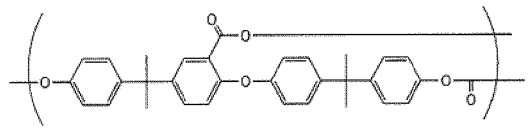
(2)

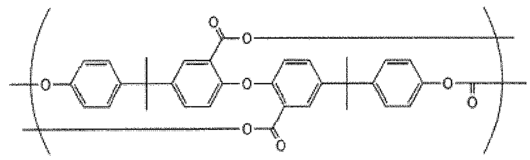
(3)

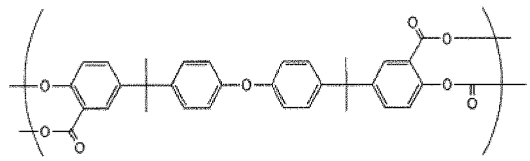
(4)

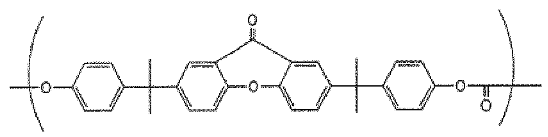
(5)

WO 2011/120921 discloses that units such as disclosed in EP 217940 are Fries branching species. Methods for determining the amount of Fries branching are known to the skilled person and generally include the methanolysis of the polycarbonate followed by HPLC chromatography to identify the total amount of Fries structures. In addition, NMR techniques can be used to determine the type and amount of these Fries structures, such as the respective amounts of linear and branched Fries structures.

It is preferred that the polycarbonate has a weight average molecular weight, Mw, of at least 15,000 to 60,000 g/mol, determined on the basis of polystyrene standards.

The desired endcap level of the melt polycarbonate can be obtained in several ways. For example, the endcap

level can be set by selecting the appropriate processing conditions during the melt polycondensation reaction. In particular, the ratio of diaryl carbonate to bisphenol and in addition to that, the type and amount of catalyst can be used to control the endcap level.

Alternatively or in addition to this an end-capping agent (also referred to as a chain stopper agent or chain-terminating agent) can be included during polymerization to provide end groups. The end- capping agent (and thus end groups) are selected based on the desired properties of the polycarbonates. The end-capping agent is preferably selected from paracumyl phenol, dicumyl phenol, p-tert-butyl phenol and mixtures of at least two of said end-capping agents.

The amount of end-capping agent to be employed depends on the exact location and conditions of where the end-capping agent is introduced during the melt transesterification process and further on the type and the desired level of end-capping of the polycarbonate.

The endcap level is calculated with the following Formula I

$$\%EC = 100 - \left(\frac{ppmOH \times Mn}{340000}\right) \qquad \mathrm{I}$$

wherein %EC is the endcap level, ppmOH is the amount of hydroxyl end groups in parts per million by weight and Mn is the number average molecular weight of the polycarbonate based on polycarbonate standards.

In accordance with the invention, the aromatic polycarbonate has an endcap level of at least 75 mol % wherein the endcap level is defined as the percentage of polycarbonate chain ends which are not hydroxyl groups. Thus, a polycarbonate having and endcap level of 75 mol % means that the polycarbonate has 25 mol % of chain ends that are phenolic OH end groups, usually resulting from the bisphenol A monomer. The other 75 mol % of end groups do not contain a OH end group and may be phenolic or correspond to the end capping agent molecule(s).

The amount of chain ends that are end-capped with the end-capping agent is preferably at least 25 mol % on the basis of the total amount of end-groups.

The endcap level is defined as the mole percentage of end-groups of the polycarbonate that is not a hydroxyl group and can be calculated from the amount of terminal OH groups in the polycarbonate and the number average molecular weight (Mn) in accordance with Formula I.

It is preferred that the melt polycarbonate is obtained via the melt transesterification of a diaryl carbonate, a bisphenol and an end-capping agent selected from the group consisting of paracumyl phenol, dicumyl phenol, p-tert-butyl phenol and mixtures of at least two of said end-capping agents.

The aromatic polycarbonate in accordance with the invention, whether it consists of melt polycarbonate or is comprised of a mixture comprising melt polycarbonate is preferably bisphenol A polycarbonate homopolymer. Thus, when the aromatic polycarbonate consists of melt polycarbonate then the melt polycarbonate is preferably bisphenol A polycarbonate homopolymer and when the aromatic polycarbonate comprises melt polycarbonate and one or more further polycarbonates, such as interfacial polycarbonate, then preferably all polycarbonate is bisphenol A polycarbonate homopolymer.

The aromatic polycarbonate in accordance with the invention preferably does not comprise a copolymer, such as for example polycarbonate-polysiloxane copolymers.

It is further preferred that apart from aromatic polycarbonate the composition as disclosed herein does not comprise non-aromatic polycarbonate.

<u>Polyester</u>

The polyester of the composition disclosed herein comprises, essentially consists of or consists of poly(butylene terephthalate). The poly(butylene terephthalate) may be a mixture of two or more different poly(butylene terephthalate)s, for example a mixture of poly(butylene terephthalate)s with mutually different molecular weights.

Polyesters like poly(butylene terephthalate) and polyethylene terephthalate are known to a skilled person per se. In a particularly preferred embodiment, the said polyester comprises poly(butylene terephthalate) (PBT).

It is preferred that the poly(butylene terephthalate) has a weight average molecular weight of 50,000 to 150,000 g/mol as determined using gel permeation chromatography with polystyrene standards.

It is preferred that the polyester in the composition contains at least 25 wt.%, preferably at least 50 wt.%, more preferably at least 75 wt.% of poly(butylene terephthalate) based on the amount of polyester. The polyester may also comprise at least 95 wt.% or 99 wt.% of poly(butylene terephthalate) or may essentially consist or consist of poly(butylene terephthalate).

In order to further increase the heat resistance the polyester may comprise another polyester, miscible with poly(butylene terephthalate), having a higher heat resistance compared to the heat resistance of virgin poly(butylene terephthalate). Thus, it is preferred that the polyester comprises a polyester having a higher heat distortion temperature

that polybutylene terephthalate. The amount of said further polyester may be from 1 to 20 wt.%, based on the weight of the polyester. Examples of such polyesters are polyethylene naphthalate (PEN), polybutylene naphthalate (PBN), polytrimethylene terephthalate (PTT) and polyethylene terephthalate.

It is particular preferred that the polyester comprises polyethylene terephthalate.

Polyethylene terephthalate is a well-known polyester and readily available. The polyethylene terephthalate may be a mixture of two or more different polyethylene terephthalates, for example a mixture of polyethylene terephthalates with mutually different molecular weights.

If the polyester comprises both polybutylene terephthalate and polyethylene terephthalate then it is preferred that the polyester comprises from 1 to 20 wt. % of poly(ethylene terephthalate) and 99 to 80 wt. % of poly(butylene terephthalate) based on the weight of the polyester. It is preferred that the sum of the amount of poly ethylene terephthalate and polybutylene terephthalate is at least 90 wt.%, preferably at least 95 wt.%, more preferably at least 99 wt.%, most preferably 100 wt.% based on the weight of the polyester.

Other polyester having a similar effect may include polyethylene naphthalate (PEN), Polybutylene naphthalate (PBN), polytrimethylene terephthalate (PTT). It can also include a branched polyester, in which a branching agent, for example, a glycol having three or more hydroxyl groups or a trifunctional or multifunctional carboxylic acid has been incorporated, can be used.

The amount of polyester other than poly(butylene terephthalate), such as in particular polyethylene terephthalate, may be at most 50 wt.%, preferably at most 35 wt.%, more preferably at most 15 wt.% based on the weight of polyester in the composition.

Nucleating agents

The composition disclosed herein can further include one or more nucleating agents. In that respect, the term nucleating agent refers to an additive that enhances the formation of crystals in the polyester phase of the composition. Addition of a nucleating agent will accordingly increase the crystallinity of the polyester phase, which results in an increased heat resistance. Talc is particularly preferred as nucleating agent. The composition preferably comprises from 0.01 to 5% by weight, with preference from 0.02 to 1% by weight and particularly preferably from 0.05 to 0.2% by weight, of nucleating agents.

Impact modifiers

The composition of the invention contains from 1 -10 wt.% of an impact modifier, based on the weight of the composition. The amount of impact modifier comprised in the composition may be from 1 - 10 wt.%, preferably from 1 - 8 wt.% or from 2 - 7 or from 3-5 wt.% based on the weight of the composition. There is no restriction on the type of impact modifier and any material commonly used in PC/PBT compositions may be used. Suitable impact modifiers are typically high molecular weight elastomeric materials derived from olefins, monovinyl aromatic monomers, acrylic and methacrylic acids and their ester derivatives, as well as conjugated dienes. The polymers formed from conjugated dienes can be fully or partially hydrogenated. The elastomeric materials can be in the form of homopolymers or copolymers, including random, block, radial block, graft, and core-shell copolymers. Combinations of impact modifiers can be used.

It is preferred that the impact modifier is selected from the group consisting of ethylene-vinyl acetate copolymer, ethylene-methyl-acrylate copolymer, ethylene-ethyl acrylate copolymer, ethylene-butyl acrylate copolymer, low density polyethylene, maleic anhydride grafted ethylene-octene copolymer, ethylene-ethyl acrylate-glycidyl ester copolymer, ethylene-butyl acrylate-glycidyl ester copolymer, rubber modified styrene-acrylonitrile copolymer, rubber modified styrene-acrylonitrile-methyl methacrylate copolymer, styrene-acrylonitrile copolymer and combinations of at least two of the foregoing (co)polymers.

Other additives

Typical additives that are used in the composition can comprise one or more of an flow modifier, filler, reinforcing agent (e.g., glass fibers or glass flakes), antioxidant, heat stabilizer, light stabilizer, UV light stabilizer and/or UV absorbing additive, plasticizer, lubricant, release agent, in particular glycerol monostearate, pentaerythritol tetra stearate, glycerol tristearate, stearyl stearate, antistatic agent, antifog agent, antimicrobial agent, colorant (e.g., a dye or pigment), flame retardant either or not combined with an anti-drip agent such as polytetrafluoroethylene (PTFE) or PTFE-encapsulated styrene-acrylonitrile copolymer.

The compositions can be manufactured by various methods known in the art. For example, polycarbonate, poly(butylene terephthalate), poly(ethylene terephthalate), and other components are first blended, optionally with any fillers or additives, in a high speed mixer or by hand mixing. The blend is then fed into the throat of a twin-screw extruder via a hopper. Alternatively, at least one of the components can be incorporated into the composition by feeding it directly

into the extruder at the throat and/or downstream through a side feeder, or by being compounded into a masterbatch with a desired polymer and fed into the extruder. The extruder is generally operated at a temperature higher than that necessary to cause the composition to flow. The extrudate can be immediately cooled in a water bath and pelletized. The pellets so prepared can be one-fourth inch long or less as desired. Such pellets can be used for subsequent molding, shaping, or forming.

Shaped, formed, or molded articles comprising the compositions are also provided. The compositions can be molded into useful shaped articles by a variety of methods, such as injection molding, extrusion, blow molding and thermoforming. Some example of articles include automotive and vehicular body panels such as bumper covers and bumpers or a housing for electrical equipment.

Accordingly, the present invention relates to an article comprising or consisting of the composition disclosed herein.

More in particular the present invention relates to vehicular body parts or for housing of electrical equipment comprising or consisting the composition disclosed herein. Likewise, the present invention relates to a vehicle or an electrical equipment comprising said vehicular body part or said housing.

The present invention relates to the use of the composition disclosed herein for the manufacture of an article of manufacture, such as an automotive part.

The present invention further relates to the use of melt aromatic polycarbonate having an endcap level of at least 75 mol% in a composition comprising aromatic polycarbonate and poly(butylene terephthalate) for improving the impact properties of said composition when compared to an otherwise identical composition comprising melt polycarbonate having an endcap level of less than 75 mol%, preferably less than 65 mol%.

Composition

The composition disclosed herein preferably has one or more of:

- a Vicat softening point, as determined in accordance with ISO-306 B120 at a load of 50N and a speed of 120°C/hr of at least 90% of the Vicat softening point of an otherwise identical composition wherein the aromatic polycarbonate consists of interfacial polycarbonate,
- a heat distortion temperature, as determined in accordance with ISO 75 flatwise at a load of 0.45 MPa, of at least 90% of the heat distortion temperature of an otherwise identical composition wherein the aromatic polycarbonate consists of interfacial polycarbonate,
- a notched Izod Impact energy as determined in accordance with ASTM D256 at 23°C measured on an injection moulded sample having a thickness of 3.2mm, of at least 90% of the notched Izod Impact of an otherwise identical composition wherein the aromatic polycarbonate consists of interfacial polycarbonate.

It is in particular preferred that the composition has a notched Izod Impact energy as determined in accordance with ASTM D256 at 23°C measured on an injection moulded sample having a thickness of 3.2mm, of at least 90%, preferably at least 95% of the notched Izod Impact of an otherwise identical composition wherein the aromatic polycarbonate consists of interfacial polycarbonate.

It is preferred that in the composition disclosed herein the aromatic polycarbonate has a weight average molecular weight of 15,000 to 60,000 g/mol when determined using gel permeation chromatography with polycarbonate standards and/or wherein the poly(butylene terephthalate) has a weight average molecular weight of 60,000 to 150,000 g/mol as determined using gel permeation chromatography with polystyrene standards.

In the composition disclosed herein the combined amount of polyester, aromatic polycarbonate and impact modifier is preferably at least 85 wt.%, more preferably at least 90 wt.%, 95 wt.% or 98 wt.% based on the total weight of the composition. It is preferred that the composition comprises at most 10 wt.% preferably at most 5 wt.% of further additives. It is further preferred that the composition as disclosed herin does not contain glass fibers.

The composition according to the invention comprises both aromatic polycarbonate and polyester. The amount of aromatic polycarbonate is at least 60 wt.% and the amount of polyester is at most 40 wt.% based on the combined weight of the aromatic polycarbonate and the polyester. It is preferred that the amount of polycarbonate is from 65 - 90 wt.% and the amount of polyester from 35 -10 wt.%. More preferably the amount of polycarbonate is from 70 - 85 wt.% and the amount of polyester from 30 - 15 wt.%, based on the combined weight of the polyester and the polycarbonate.

It is preferred that the composition comprises at most 3 wt.%, based on the weight of the composition, of a filler such as a glass or glassy filler, specifically a glass fiber, a glass flake, and a glass bead, talc, or mica.

It is preferred that the composition does not contain fillers and in particular that the composition does not contain one or more of glass fibers, glass flakes, glass beads talc or mica, provided that talc may be added in an amount of at most 1 wt.%.

The present invention will now be further elucidated based on the following non-limiting examples.

Test Methods

| | |
|---|---|
| Impact | Notched Izod impact properties were determined in accordance with ASTM D256 on injection moulded samples being 64 x 12.7 x 3.2 mm in size. The test was carried out at 23°C. The impact energy is expressed in J/m. Impact strength is calculated by dividing impact energy in J by the thickness of the specimen. The test result is the average of 5 specimens. |
| Melt volume rate (MVR) | The melt volume rate was determined in accordance with ASTM D1238. For polycarbonate measurements were carried out at a temperature of 300°C and a load of 1.2 kg. For the compositions of the examples measurements were carried out at a temperature of 250°C and a load of 5.0 kg. |
| Fries branching | The amount of Fries branching was determined using an Agilent 1100series HPLC equipped with a MWD G1365B detector. The column is an Agilent Zorbax Eclipse XDB-C18 4.6 x 75 mm. The injection volume is 50ml. The oven temperature is 35 °C and the wavelength to acquire data is 320.16 nm. For sample preparation 0.3g of sample is dissolved in 7.5 ml of a solvents mixture based on 5 ml of tetrahydrofuran and 2.5 ml of a 10 % of potassium hydroxide solution in methanol, after heating this sample at 40°C during 20 min, 1.4 ml of acetic acid is added. |
| Intrinsic viscosity | The intrinsic viscosity of the polyesters was measured in 1:1 weight to weight mixture of phenol: 1,1,2,2 - tetrachloro ethane at 30°C. |
| Endcap level | The endcap level was determined based on UV measurement to determine the amount of terminal OH groups. Combined with the number average molecular weight the endcap level is then determined in accordance with Formula I. The UV spectrophotometer was a Perkin Elmer Lambda 800. Measurements were carried out on 0.01g of a polycarbonate sample diluted in 10 ml of dichloromethane and placed into a quartz cuvette of 10 mm of optical path. The wavelength to acquire data are 284 and 292 nm. The results from the equipment as ppm of OH are used to calculate the endcap using also the molecular weight of the polycarbonate and according to the formula for calculation as disclosed herein. |
| Vicat softening temperature | The Vicat softening point (in °C) was determined in accordance with ISO 306 at a load of 50N and a speed of 120°C/hr on injection molded samples. |
| Heat distortion temperature | The heat distortion temperature, HDT (in °C) was determined in accordance with ISO 75 flatwise at a load of 0.45 MPa. |

Materials

The following materials were used in the experiments.

| | |
|---|---|
| PC1 | Bisphenol A polycarbonate manufactured using an interfacial process, having a melt volume rate of 6cc/10 min, and endcap level of about 100% and a Fries branching level of less than 100 ppm, available from SABIC. Para-cumyl phenol was used as an endcapping agent. |
| PC2 | Bisphenol A polycarbonate manufactured using a melt transesterification process, having a melt volume rate of 6cc/10 min, and endcap level of 65% and a Fries branching level of 1100 ppm. |
| PC3 | Bisphenol A polycarbonate manufactured using a melt transesterification process, having a melt volume rate of 6cc/10 min, and endcap level of 85% and a Fries branching level of 1100 ppm |
| PC4 | Bisphenol A polycarbonate manufactured using a melt transesterification process, having a melt volume rate of 6cc/10 min, and endcap level of 85% and a Fries branching level of 1400 ppm. |
| PC5 | Bisphenol A polycarbonate manufactured using an interfacial process, having a melt volume rate of 26cc/10 min, and endcap level of about 100% and a Fries branching level of less than 100 ppm, available from SABIC. Para-cumyl phenol was used as an endcapping agent. |
| PC6 | Bisphenol A polycarbonate manufactured using a melt transesterification process, having a melt volume rate of 26cc/10 min, and endcap level of 65% and a Fries branching level of 1100 ppm. |

(continued)

| | |
|---|---|
| PBT | A polybutylene terephthalate having an intrinsic viscosity of 1.2 dl/g as measured in 1:1 weight to weight mixture of phenol: 1,1,2,2 - tetrachloro ethane at 30°C, commercially available from Chang Chun Plastics, Taiwan under the grade name CCP PBT 1100. |
| IM1 | Reactive elastomeric ethylene acrylate terpolymer, having a density of 0.94 g/cm$^3$, a melt flow rate of 8 g/10 min (ISO 1133, 190°C, 21.6 kg) commercially available as Elvaloy 4170 from DOW. IM1 is used as an impact modifier. |
| IM2 | MBS impact modifier, commercially available from Dow Chemical as Paraloid EXL 2550J. |
| Quencher | Mono sodium phosphate |
| AO1 | Primary antioxidant, Octadecyl β - (3,5-di- tert -butyl-4-hydroxy phenyl)-propionate, CAS 2082-79-3, Commercially available as Irganox 1076 |
| AO2 | Secondary antioxidant, tris(2,4-di-tert.-butylphenyl)phosphite, CAS 31570-04-4, commercially available from BASF as Irgafos 168 |
| | |

Table 1

| | | CE1 | CE2 | E1 | E2 | CE3 | E3 | E4 |
|---|---|---|---|---|---|---|---|---|
| PC1 | [wt.%] | 57.3 | | | | 10 | 20 | 30 |
| PC2 | [wt.%] | | 57.3 | | | 57.3 | 47.3 | 37.3 |
| PC3 | [wt.%] | | | 57.3 | | | | |
| PC4 | [wt.%] | | | | 57.3 | | | |
| PC5 | [wt.%] | 10 | | | | | | |
| PC6 | [wt.%] | | 10 | 10 | 10 | | | |
| PBT | [wt.%] | 30 | 30 | 30 | 30 | 30 | 30 | 30 |
| IM1 | [wt.%] | 2 | 2 | 2 | 2 | 2 | 2 | 2 |
| IM2 | [wt.%] | | | | | | | |
| Quencher | [wt.%] | 0.3 | 0.3 | 0.3 | 0.3 | 0.3 | 0.3 | 0.3 |
| AO1 | [wt.%] | 0.2 | 0.2 | 0.2 | 0.2 | 0.2 | 0.2 | 0.2 |
| AO2 | [wt.%] | 0.2 | 0.2 | 0.2 | 0.2 | 0.2 | 0.2 | 0.2 |
| | | | | | | | | |
| EC | [%] | 100 | 65 | 82 | 82 | 70* | 75* | 81* |
| NII (23°C) | [J/m] | 769 | 146 | 739 | 473 | 691 | 708 | 741 |
| NII (-30°C) | [J/m] | 102 | 84 | 89 | 82 | 108 | 106 | 108 |
| * For CE3, E3 and E4 the EC was calculated based on the EC's of the polycarbonates assuming the Mn is identical. | | | | | | | | |

From Table 1 it may be appreciated that the endcap level of the polycarbonate is relevant to the impact performance of the composition. Thus, by way of example a comparison of CE2 CE1 shows that the use of melt polycarbonate (with a low endcap level) provides for a composition having a relatively low impact energy compared to an otherwise identical composition containing interfacial polycarbonate (with a high endcap level). The effect of mixing interfacial polycarbonate with melt polycarbonate is shown by means of examples CE3, E3 and E4.

Table 2

| | | CE3 | E5 | CE4 | E6 | CE5 | E7 |
|---|---|---|---|---|---|---|---|
| PC1 | [wt.%] | 57.3 | | 55.4 | | 52.6 | |
| PC2 | [wt.%] | | | | | | |
| PC3 | [wt.%] | | 57.3 | | 55.4 | | 52.6 |
| PC4 | [wt.%] | | | | | | |
| PC5 | [wt.%] | 10.0 | | 9.8 | | 9.2 | |
| PC6 | [wt.%] | | 10.0 | | 9.8 | | 9.2 |
| PBT | [wt.%] | 30.0 | 30.0 | 29.1 | 29.1 | 27.5 | 27.5 |
| IM1 | [wt.%] | | | | | | |
| IM2 | [wt.%] | 2.0 | 2.0 | 5.0 | 5.0 | 10.0 | 10.0 |
| Quencher | [wt.%] | 0.3 | 0.3 | 0.3 | 0.3 | 0.3 | 0.3 |
| AO1 | [wt.%] | 0.2 | 0.2 | 0.2 | 0.2 | 0.2 | 0.2 |
| AO2 | [wt.%] | 0.2 | 0.2 | 0.2 | 0.2 | 0.2 | 0.2 |
| | | | | | | | |
| EC | [%] | 100 | 82* | 100 | 82* | 100 | 82* |
| NiI (23°C) | [J/m] | 682 | 127 | 740 | 718 | 705 | 707 |
| NiI (-30°C) | [J/m] | 104 | 98 | 368 | 178 | 662 | 633 |
| * Calculated based on the EC's of the polycarbonates assuming the Mn is identical. | | | | | | | |

The experimental data in Table 2 shows that the effect observed in Table 1 is also seen when a different impact modifier is used and further that if the amount of impact modifier in the composition is increased that the effect of the endcap level of the polycarbonate on the impact energy becomes less dominant compared to the effect of the impact modifier.

Table 3

| | | E8 | E9 | E10 | E11 | E12 |
|---|---|---|---|---|---|---|
| PC1 | [wt.%] | | | | | |
| PC2 | [wt.%] | | | | | |
| PC3 | [wt.%] | 55.5 | 52.6 | 65.7 | 48.7 | 40.2 |
| PC4 | [wt.%] | | | | | |
| PC5 | [wt.%] | | | | | |
| PC6 | [wt.%] | 9.7 | 9.2 | 11.6 | 8.6 | 7.1 |
| PBT | [wt.%] | 29.1 | 27.5 | 20.0 | 40.0 | 50.0 |
| IM1 | [wt.%] | 5.0 | 10.0 | 2.0 | 2.0 | 2.0 |
| IM2 | [wt.%] | | | | | |
| Quencher | [wt.%] | 0.3 | 0.3 | 0.3 | 0.3 | 0.3 |
| AO1 | [wt.%] | 0.2 | 0.2 | 0.2 | 0.2 | 0.2 |
| AO2 | [wt.%] | 0.2 | 0.2 | 0.2 | 0.2 | 0.2 |
| | | | | | | |
| EC | [%] | 82* | 82* | 82* | 82* | 82* |

(continued)

| | | E8 | E9 | E10 | E11 | E12 |
|---|---|---|---|---|---|---|
| Nil (23°C) | [J/m] | 870 | 837 | 839 | 150 | 115 |
| Nil (-30°C) | [J/m] | 202 | 248 | 120 | 104 | 87 |
| * Calculated based on the EC's of the polycarbonates assuming the Mn is identical. | | | | | | |

Table 3 shows inter alia the effect of the amount of polycarbonate on the impact energy. More in particular it may derived from Table 3 that if the amount of polycarbonate in the composition drops below 60 wt.% that the impact energy also drops significantly.

In the Tables 1-3 above all amounts displayed are in wt.% on the basis of the weight of the composition. Further comparison of individual data points disclosed in these tables further support the technical effects of the invention as disclosed herein.

## Claims

**1.** A composition comprising

- at least 60 wt.% aromatic polycarbonate and at most 40 wt.% of polyester comprising poly(butylene terephthalate), based on the combined amounts of aromatic polycarbonate and polyester
- from 1 - 10 wt.% of impact modifier, based on the weight of the composition,

wherein

- the composition comprises the aromatic polycarbonate and the polyester
- the aromatic polycarbonate has an endcap level of at least 75 mol%, preferably at least 80 mol%
- the aromatic polycarbonate comprises melt polycarbonate,
- the endcap level is determined in accordance with the method set out in the description.

**2.** The composition of claim 1, wherein the composition has one or more of:

- a Vicat softening point, as determined in accordance with ISO-306 B120 at a load of 50N and a speed of 120°C/hr of at least 90% of the Vicat softening point of an otherwise identical composition wherein the aromatic polycarbonate consists of interfacial polycarbonate,
- a heat distortion temperature, as determined in accordance with ISO 75 flatwise at a load of 0.45 MPa, of at least 90% of the heat distortion temperature of an otherwise identical composition wherein the aromatic polycarbonate consists of interfacial polycarbonate,
- a notched Izod Impact energy as determined in accordance with ASTM D256 at 23°C measured on an injection moulded sample having a thickness of 3.2mm, of at least 90% of the notched Izod Impact of an otherwise identical composition wherein the aromatic polycarbonate consists of interfacial polycarbonate.

**3.** The composition of claim 1 or 2 wherein the melt polycarbonate is obtained via the melt transesterification of a diaryl carbonate, a bisphenol and optionally an end-capping agent selected from the group consisting of paracumyl phenol, dicumyl phenol, p-tert-butyl phenol and mixtures of at least two of said end-capping agents.

**4.** The composition of any one or more of claims 1-3, wherein the amount of impact modifier is from 1 - 7 wt.%, preferably from 2-5 wt.%.

**5.** The composition of any one or more of claims 1-4 further comprising a nucleating agent.

**6.** The composition of any one or more of claims 1-5 wherein the aromatic polycarbonate contains at least 50 wt. %, preferably at least 75 wt. %, more preferably at least 95 wt. % of melt polycarbonate, based on the amount of aromatic polycarbonate.

7. The composition of any one or more of claims 1-6, wherein the polyester further comprises polyethylene terephthalate).

8. The composition of any one or more of claims 1-7 wherein the polyester comprises from 1 to 20 wt. % of a poly(ethylene terephthalate) and 99 to 80 wt. % of a poly(butylene terephthalate) based on the weight of the polyester.

9. The composition of any one or more of claims 1-8 wherein the impact modifier is selected from the group consisting of ethylene-vinyl acetate copolymer, ethylene-methyl-acrylate copolymer, ethylene-ethyl acrylate copolymer, ethylene-butyl acrylate copolymer, low density polyethylene, maleic anhydride grafted ethylene-octene copolymer, ethylene-ethyl acrylate-glycidyl ester copolymer, ethylene-butyl acrylate-glycidyl ester copolymer, rubber modified styrene-acrylonitrile copolymer, rubber modified styrene-acrylonitrile-methyl methacrylate copolymer, styrene-acrylonitrile copolymer and combinations of at least two of the foregoing (co)polymers.

10. The composition of any one or more of claims 1-9 wherein the aromatic polycarbonate has a weight average molecular weight of 15,000 to 60,000 g/mol when determined using gel permeation chromatography with polycarbonate standards and/or wherein the poly(butylene terephthalate) has a weight average molecular weight of 60,000 to 150,000 g/mol as determined using gel permeation chromatography with polystyrene standards.

11. The composition of any one or more of claims 1 - 10 wherein the combined amount of polyester, aromatic polycarbonate and impact modifier is at least 85 wt.% based on the weight of the composition.

12. An article comprising or consisting of the composition of any one or more of claims 1-10, wherein said article is preferably a vehicular body part or a housing for electrical equipment.

13. A vehicle or an electrical equipment comprising the article of claim 12.

14. Use of a composition of any one or more of claims 1-10 for the manufacture of an article, preferably an automotive part.

15. Use of melt aromatic polycarbonate having an endcap level of at least 75 mol% in a composition comprising aromatic polycarbonate, poly(butylene terephthalate) and an impact modifier for improving the impact properties of said composition when compared to an otherwise identical composition comprising melt polycarbonate having an endcap level of less than 75 mol%, preferably less than 65 mol%, wherein endcap level is determined in accordance with the method set out in the description.

**Patentansprüche**

1. Zusammensetzung umfassend

- wenigstens 60 Gew.-% aromatisches Polycarbonat und höchstens 40 Gew.-% Polyester, der Poly(butylenterephthalat) umfasst, bezogen auf die kombinierten Mengen von aromatischem Polycarbonat und Polyester,
- von 1 bis 10 Gew.-% Schlagzähmodifikator, bezogen auf das Gewicht der Zusammensetzung,

wobei

- die Zusammensetzung das aromatische Polycarbonat und den Polyester umfasst,
- das aromatische Polycarbonat einen Endkappengehalt von wenigstens 75 mol-%, vorzugsweise wenigstens 80 mol-%, aufweist,
- das aromatische Polycarbonat Schmelzpolycarbonat umfasst,
- der Endkappengehalt gemäß dem in der Beschreibung beschriebenen Verfahren bestimmt wird.

2. Zusammensetzung gemäß Anspruch 1, wobei die Zusammensetzung eines oder mehrere aufweist von:

- einen Vicat-Erweichungspunkt, wie bestimmt gemäß ISO-306 B120 bei einer Last von 50 N und einer Geschwindigkeit von 120 °C/h, von wenigstens 90 % des Vicat-Erweichungspunkts einer im Übrigen identischen Zusammensetzung, bei der das aromatische Polycarbonat aus Grenzflächenpolycarbonat besteht,
- eine Formbeständigkeitstemperatur, wie bestimmt gemäß ISO 75 flach bei einer Last von 0,45 MPa, von wenigstens 90 % der Formbeständigkeitstemperatur einer im Übrigen identischen Zusammensetzung, bei der

das aromatische Polycarbonat aus Grenzflächenpolycarbonat besteht,
- eine Izod-Kerbschlagenergie, wie bestimmt gemäß ASTM D256 bei 23 °C, gemessen an einer spritzgegossenen Probe mit einer Dicke von 3,2 mm, von wenigstens 90 % der Izod-Kerbschlagenergie einer im Übrigen identischen Zusammensetzung, bei der das aromatische Polycarbonat aus Grenzflächenpolycarbonat besteht.

**3.** Zusammensetzung gemäß Anspruch 1 oder 2, wobei das Schmelzpolycarbonat durch Schmelz-Umesterung eines Diarylcarbonats, eines Bisphenols und gegebenenfalls eines Endverkappungsmittels ausgewählt aus der Gruppe bestehend aus Paracumylphenol, Dicumylphenol, p-tert-Butylphenol und Gemischen von wenigstens zwei der Endverkappungsmittel erhalten ist.

**4.** Zusammensetzung gemäß einem oder mehreren der Ansprüche 1-3, wobei die Menge an Schlagzähmodifikator von 1-7 Gew.-%, vorzugsweise von 2-5 Gew.-%, beträgt.

**5.** Zusammensetzung gemäß einem oder mehreren der Ansprüche 1-4, ferner umfassend einen Keimbildner.

**6.** Zusammensetzung gemäß einem oder mehreren der Ansprüche 1-5, wobei das aromatische Polycarbonat wenigstens 50 Gew.-%, vorzugsweise wenigstens 75 Gew.-%, bevorzugter wenigstens 95 Gew.-% Schmelzpolycarbonat, bezogen auf die Menge an aromatischem Polycarbonat, enthält.

**7.** Zusammensetzung gemäß einem oder mehreren der Ansprüche 1-6, wobei der Polyester ferner Poly(ethylenterephthalat) umfasst.

**8.** Zusammensetzung gemäß einem oder mehreren der Ansprüche 1-7, wobei der Polyester von 1 bis 20 Gew.-% an einem Poly(ethylenterephthalat) und 99 bis 80 Gew.-% an einem Poly(butylenterephthalat), bezogen auf das Gewicht des Polyesters, umfasst.

**9.** Zusammensetzung gemäß einem oder mehreren der Ansprüche 1-8, wobei der Schlagzähmodifikator ausgewählt ist aus der Gruppe bestehend aus Ethylen-Vinylacetat-Copolymer, Ethylen-Methylacrylat-Copolymer, Ethylen-Ethylacrylat-Copolymer, Ethylen-Butylacrylat-Copolymer, Polyethylen mit niedriger Dichte, Maleinsäureanhydrid-gepfropftem Ethylen-Octen-Copolymer, Ethylen-Ethylacrylat-Glycidylester-Copolymer, Ethylen-Butylacrylat-Glycidylester-Copolymer, kautschukmodifiziertem Styrol-Acrylnitril-Copolymer, kautschukmodifiziertem Styrol-Acrylnitril-Methylmethacrylat-Copolymer, Styrol-Acrylnitril-Copolymer und Kombinationen von wenigstens zwei der genannten (Co)polymere.

**10.** Zusammensetzung gemäß einem oder mehreren der Ansprüche 1-9, wobei das aromatische Polycarbonat ein gewichtsgemitteltes Molekulargewicht von 15.000 bis 60.000 g/mol aufweist, wenn bestimmt unter Verwendung von Gelpermeationschromatographie mit Polycarbonatstandards, und/oder wobei das Poly(butylenterephthalat) ein gewichtsgemitteltes Molekulargewicht von 60.000 bis 150.000 g/mol aufweist, wie bestimmt unter Verwendung von Gelpermeationschromatographie mit Polystyrolstandards.

**11.** Zusammensetzung gemäß einem oder mehreren der Ansprüche 1-10, wobei die kombinierte Menge von Polyester, aromatischem Polycarbonat und Schlagzähmodifikator wenigstens 85 Gew.-%, bezogen auf das Gewicht der Zusammensetzung, beträgt.

**12.** Gegenstand, umfassend oder bestehend aus der Zusammensetzung gemäß einem oder mehreren der Ansprüche 1-10, wobei der Gegenstand vorzugsweise ein Fahrzeugkarosserieteil oder ein Gehäuse für ein Elektrogerät ist.

**13.** Fahrzeug oder Elektrogerät, umfassend den Gegenstand gemäß Anspruch 12.

**14.** Verwendung einer Zusammensetzung gemäß einem oder mehreren der Ansprüche 1-10 zur Herstellung eines Gegenstands, vorzugsweise eines Automobilteils.

**15.** Verwendung von aromatischem Schmelzpolycarbonat mit einem Endkappengehalt von wenigstens 75 mol-% in einer Zusammensetzung, die aromatisches Polycarbonat, Poly(butylenterephthalat) und einen Schlagzähmodifikator umfasst, zum Verbessern der Schlagzäheigenschaften der Zusammensetzung im Vergleich zu einer im Übrigen identischen Zusammensetzung, die Schmelzpolycarbonat mit einem Endkappengehalt von weniger als 75 mol-%, vorzugsweise weniger als 65 mol-%, enthält, wobei der Endkappengehalt gemäß dem in der Beschreibung beschriebenen Verfahren bestimmt wird.

## Revendications

**1.** Composition comprenant

- au moins 60 % en poids de polycarbonate aromatique et au plus 40 % en poids de polyester comprenant un poly(téréphtalate de butylène), sur la base des quantités combinées de polycarbonate aromatique et de polyester
- de 1 à 10 % en poids de modificateur de résistance aux chocs, sur la base du poids de la composition,
- la composition comprenant le polycarbonate aromatique et le polyester
- le polycarbonate aromatique ayant un taux de coiffage en terminaison d'au moins 75 % en moles, préférablement d'au moins 80 % en moles
- le polycarbonate aromatique comprenant un polycarbonate fondu,
- le taux de coiffage en terminaison étant déterminé conformément au procédé indiqué dans la description.

**2.** Composition selon la revendication 1, la composition ayant l'un ou plusieurs parmi :

- un point de ramollissement Vicat, comme déterminé conformément à la norme ISO-306 B120 à une charge de 50 N et une vitesse de 120 °C/h d'au moins 90 % du point de ramollissement Vicat d'une composition par ailleurs identique, le polycarbonate aromatique étant constitué de polycarbonate interfacial,
- une température de déformation thermique, comme déterminée conformément à la norme ISO 75 à plat à une charge de 0,45 MPa, d'au moins 90 % de la température de déformation thermique d'une composition par ailleurs identique, le polycarbonate aromatique étant constitué de polycarbonate interfacial,
- une énergie de résistance aux chocs Izod entaillé conformément à la norme ASTM D256 à 23 °C mesurée sur un échantillon moulé par injection ayant une épaisseur de 3,2 mm, d'au moins 90 % de la résistance aux chocs Izod entaillé d'une composition par ailleurs identique, le polycarbonate aromatique étant constitué de polycarbonate interfacial.

**3.** Composition selon la revendication 1 ou 2, le polycarbonate fondu étant obtenu via la transestérification en fusion d'un carbonate de diaryle, d'un bisphénol et éventuellement d'un agent de coiffage de terminaison choisi dans le groupe constitué par le paracumylphénol, le dicumylphénol, le p-tert-butylphénol et des mélanges d'au moins deux desdits agents de coiffage de terminaison.

**4.** Composition selon l'une quelconque ou plusieurs des revendications 1 à 3, la quantité de modificateur de résistance aux chocs étant de 1 à 7 % en poids, préférablement de 2 à 5 % en poids.

**5.** Composition selon l'une quelconque ou plusieurs des revendications 1 à 4 comprenant en outre un agent de nucléation.

**6.** Composition selon l'une quelconque ou plusieurs des revendications 1 à 5, le polycarbonate aromatique contenant au moins 50 % en poids, préférablement au moins 75 % en poids, plus préférablement au moins 95 % en poids de polycarbonate fondu, sur la base de la quantité de polycarbonate aromatique.

**7.** Composition selon l'une quelconque ou plusieurs des revendications 1 à 6, le polyester comprenant en outre un poly(téréphtalate d'éthylène).

**8.** Composition selon l'une quelconque ou plusieurs des revendications 1 à 7, le polyester comprenant 1 à 20 % en poids d'un poly(téréphtalate d'éthylène) et 99 à 80 % en poids d'un poly(téréphtalate de butylène) sur la base du poids du polyester.

**9.** Composition selon l'une quelconque ou plusieurs des revendications 1 à 8, le modificateur de résistance au choc étant choisi dans le groupe constitué par un copolymère d'éthylène-acétate de vinyle, un copolymère d'éthylène-acrylate de méthyle, un copolymère d'éthylène-acrylate d'éthyle, un copolymère d'éthylène-acrylate de butyle, un polyéthylène basse densité, un copolymère d'éthylène-octène greffé par l'anhydride maléique, un copolymère d'éthylène-acrylate d'éthyle-ester de glycidyle, un copolymère d'éthylène-acrylate de butyle-ester de glycidyle, un copolymère de styrène-acrylonitrile modifié par un caoutchouc, un copolymère de styrène-acrylonitrile-méthacrylate de méthyle modifié par un caoutchouc, un copolymère de styrène-acrylonitrile et des combinaisons d'au moins deux des (co)polymères précédents.

**10.** Composition selon l'une quelconque ou plusieurs des revendications 1 à 9, le polycarbonate aromatique ayant un

poids moléculaire moyen en poids de 15 000 à 60 000 g/mole lorsqu'il est déterminé en utilisant une chromatographie à perméation de gel avec des références de polycarbonate et/ou le poly(téréphtalate de butylène) ayant un poids moléculaire moyen en poids de 60 000 à 150 000 g/mole comme déterminé en utilisant une chromatographie à perméation de gel avec des références de polystyrène.

**11.** Composition selon l'une quelconque ou plusieurs des revendications 1 à 10, la quantité combinée de polyester, de polycarbonate aromatique et de modificateur de résistance aux chocs étant d'au moins 85 % en poids sur la base du poids de la composition.

**12.** Article comprenant ou constitué de la composition selon l'une quelconque des revendications 1 à 10, ledit article étant préférablement une pièce de corps véhiculaire ou un boîtier pour un appareil électrique.

**13.** Véhicule ou appareil électrique comprenant l'article selon la revendication 12.

**14.** Utilisation d'une composition selon l'une quelconque ou plusieurs des revendications 1 à 10 pour la fabrication d'un article, préférablement d'une pièce d'automobile.

**15.** Utilisation d'un polycarbonate aromatique fondu ayant un taux de coiffage en terminaison d'au moins 75 % en moles dans une composition comprenant un polycarbonate aromatique, un poly(téréphtalate de butylène) et un modificateur de résistance aux chocs pour améliorer les propriétés de résistance aux chocs de ladite composition lorsqu'elle est comparée à une composition par ailleurs identique comprenant un polycarbonate fondu ayant un taux de coiffage en terminaison inférieur à 75 % en moles, préférablement inférieur à 65 % en moles, le taux de coiffage en terminaison étant déterminé conformément au procédé indiqué dans la description.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014097196 A
- WO 2017093232 A
- US 20080269399 A
- WO 2017145075 A1
- EP 2174970 A
- WO 2011120921 A
- EP 217940 A